# EUROPEAN PATENT SPECIFICATION

(11) **EP 0 676 555 B1**
(45) Date of publication and mention of the grant of the patent: **29.07.1998**
(21) Application number: 95104978.2
(22) Date of filing: 03.04.1995
(51) Int. Cl.: F16D 3/18, F16D 3/84

(54) **Flexible geared joint**
Elastische Zahnradkupplung
Joint flexible à engrenage

(30) Priority: 04.04.1994 JP 65953/94
(43) Date of publication of application: 11.10.1995
(73) Proprietor: MITSUBISHI DENKI KABUSHIKI KAISHA, Tokyo 100 (JP)
(72) Inventor: Shigeura, Junichi, c/o Mitsubishi Denki K. K., Amagasaki-shi, Hyogo 661 (JP)
(74) Representative: Popp, Eugen, Dr.

(56) References cited:
- EP-A- 0 499 745
- DE-A- 2 212 969
- FR-A- 2 239 158
- US-A- 2 801 140
- US-A- 3 368 369
- US-A- 3 613 395
- US-A- 4 417 881
- US-A- 4 813 343
- US-A- 4 911 678

## Description

The present invention relates to a flexible geared joint for connection, for example, between a drive motor and a reduction gear system for railroad rolling stocks.

A railroad car drive motor is installed on a truck frame and a reduction gear system is installed on an axle. Accordingly, the different installed-locations can make a positional difference and angle between the output shaft of the drive motor and the pinion shaft of the reduction gear system due to car vibrations during travelling. There is, however, the need for the power transmission being achieved smoothly between both the shafts irrespective of such a disalignment condition. For this reason, a flexible geared joint is employed to make a connection between the drive motor and the reduction gear system.

The United States Patent US-A-3,613,395 discloses a shaft coupling device comprising a pair of external gears provided on pinions secured on the opposite end portion of two shafts. A pair of internal gears located in sleeve portions mesh with the associated external gears. End covers are fixedly secured to the outer end portions of each sleeve and enclose the space between the sleeves and the shafts to form a ring-like gap. Ring-like sealing members are secured to the shafts and have contacting surfaces which come into elastic contact with the end covers.

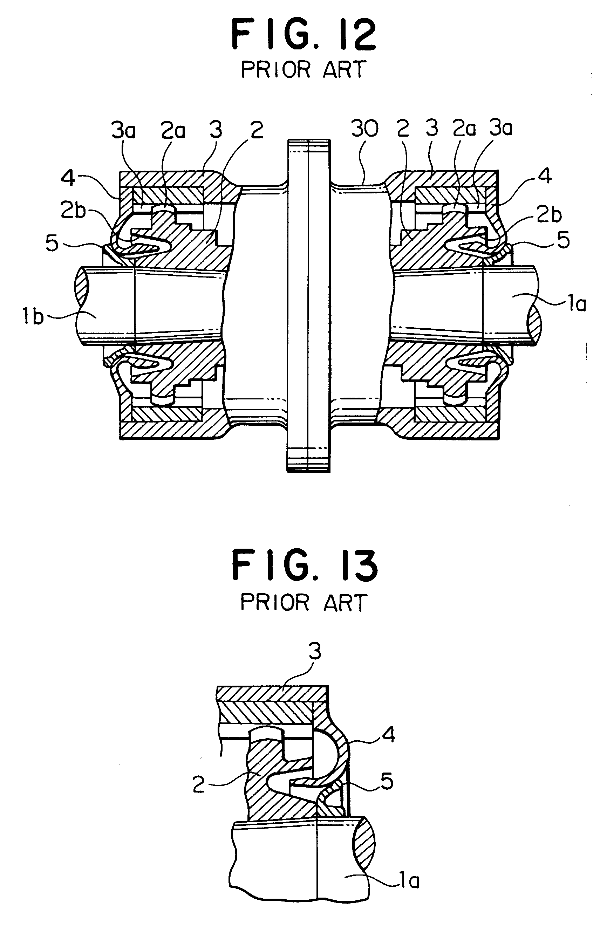

Fig. 12 is an elevational view, with portions broken away for clarity, of another conventional flexible geared joint disclosed in the Japanese Utility Model Publication JP-U-35-13707. In the illustration, a first rotating shaft 1a, serving as the output shaft of a drive motor (not shown), is placed in the opposed relation to a second rotating shaft 1b, acting as the input shaft of the reduction gear system (not shown). Onto end portions of both the rotating shafts 1a, 1b there are fixedly secured pinions 2 equipped with curved-surface external gears 2a, respectively. Further, each of the pinions 2 is provided with a cavity 2b open axially and outwardly of the pinion 2. Sleeve components 3, being in the coaxially confronting relation to each other, are fixedly secured to each other with bolts or the like to make up one sleeve 30. On inner surface of each of the sleeve components 3 is formed an internal gear3a making an engagement with the external gear 2a. Here, grease fills a space near the engagement therebetween.

In addition, end covers 4 are placed at the ends of the sleeve components 3 and their outer edge portions are fixed thereto. On the other hand, their inner edge portions are positioned inside the cavities 2b, but spaced by a given distance from the pinion 2. Ring-like elastic sealing members 5 are fixedly mounted on both of the rotating shafts 1a ,1b ,such that the sealing members 5 press against the end covers 4 . The sealing members 5 and end covers 4 prevent the grease inside the sleeve components 3 from leaking toward the outside of the joint, as well as prevent dust from coming into the sleeve components 3.

With the foregoing arrangement made, even if disalignment may occur between both the rotating shafts 1a, 1b for that the the axis of the output shaft of the drive motor is deviated from the axis of the input shaft of the gear system due to vibrations while the railroad cars are travelling, the prior flexible geared joint is capable of ensuring a smooth drive transmission from the first rotating shaft 1a to the second rotating shaft 1b because the surfaces of the external gears 2a of the pinions 2 are curved(crowned) along the direction of the axis of the pinions 2 . Similarly , even if both the rotating shafts 1a, 1b move in axial directions, the external gears 2a of the pinions 2 can move more freely along the grooves of the internal gears 3a of the sleeve components 3.

Fig. 13 is an illustration for explanation of a main part of the prior flexible geared joint shown in Fig. 12, showing the state that both the rotating shafts 1a, 1b are coaxial with each other, or a disalignment does not occur. At this time the sealing members 5 come into elastic contact with the end covers 4 throughout their circumferences under a given pressure.

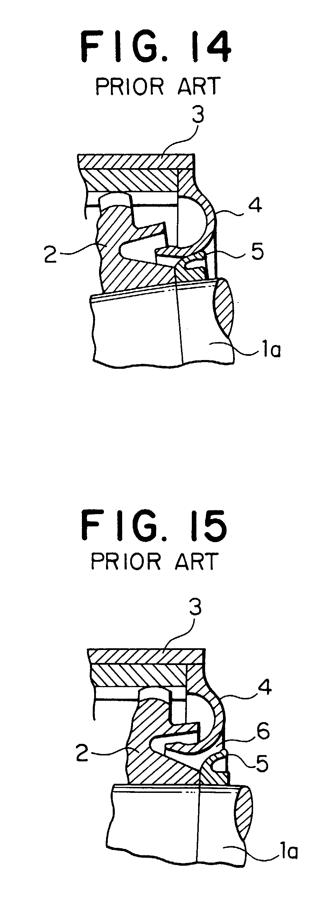

Fig. 14 shows a situation in which the first rotating shaft 1a has moved inward in relation to the sleeve component 3 and is inclined with respect to the axis of the sleeve component 3 to produce a disalignment in relation to the other rotating shaft 1b. In this case, the sealing member 5 is strongly pressed by the end cover 4 to have a large deformation.

Fig. 15 illustrates a situation in which the first rotating shaft 1a has moved outward in relation to the sleeve component 3 and is inclined with respect to the axis of the sleeve component 3 to similarly produce a disalignment in relation to the other rotating shaft 1b. This creates a gap 6 between the end cover 4 and the sealing member 5, thereby losing the hermetic seal function of the flexible geared joint.

A problem which arises with the conventional flexible geared joint constructed as described above, however, is that the sealing members 5 are excessively deformed when the disalignment occurs between both the rotating shafts 1a, 1b as illustrated in Fig. 14 and, therefore, abrasion and damage may be made easily. Moreover, the occurrence of the disalignment may lead to lowering the hermetic seal function to easily allow dust to enter into the flexible geared joint because of the creation of the gap 6 as illustrated in Fig. 15.

It is therefore an object of the present invention to eliminate the foregoing problems and to provide a flexible geared joint capable of preventing excessive deformation of sealing members and improve the hermetic seal function to prevent the invasion of dust .

According to this invention, a flexible geared joint for a power transmission between first and second rotating shafts is provided as defined in claim 1.

In one embodiment each of the sealing members is fixedly secured to each of the pinions and is brought into contact with its respective end cover, the contacting means of the sealing member being brought into contact with the entire circumference of the contacted portion of the end cover.

In another embodiment each of the sealing members is fixedly secured to each of the first and second rotating shafts and brought into contact with its respective end cover, the contacting means of the sealing member being brought into contact with the entire circumference of the contacted portion of the end cover.

The object and features of the present invention will become more readily apparent from the following detailed description of the preferred embodiments taken in conjunction with the accompanying drawings in which:
Fig. 1 is an elevational view, partially cut away, of a flexible geared joint having a different type of seal;
Fig. 2 is an illustration for describing an action of the flexible geared joint shown in Fig. 1;
Fig. 3 is an illustration for describing another action of the flexible geared joint shown in Fig. 1;
Fig. 4 is a cross-sectional view showing a main part of a flexible geared joint according to an embodiment of this invention when using the seal rings of Fig. 7;
Fig. 5 is a cross-sectional view showing a main part of a flexible geared joint having a different type of seal;
Fig. 6 is a cross-sectional view showing a main part of a flexible geared joint according to another embodiment of this invention when using the seal rings of Fig. 7;
Fig. 7 is an elevational view illustrating an sealing member of a flexible geared joint according to a further embodiment of this invention;
Fig. 8 is a cross-sectional view showing a main part of a flexible geared joint not according to this invention;
Fig. 9 is a cross-sectional view showing a main part of a flexible geared joint not according to this invention;
Fig. 10 is a cross-sectional view showing a main part of a flexible geared joint not according to of this invention;
Fig. 11 is a cross-sectional view showing a main part of a flexible geared joint not according to this invention;
Fig. 12 is an elevational view, partially cut away, of a conventional flexible geared joint;
Fig. 13 is an illustration for description of an action of the flexible geared joint illustrated in Fig. 12;
Fig. 14 is an illustration for description of another action of the flexible geared joint illustrated in Fig. 12; and
Fig. 15 is an illustration for description of a different action of the flexible geared joint illustrated in Fig. 12.

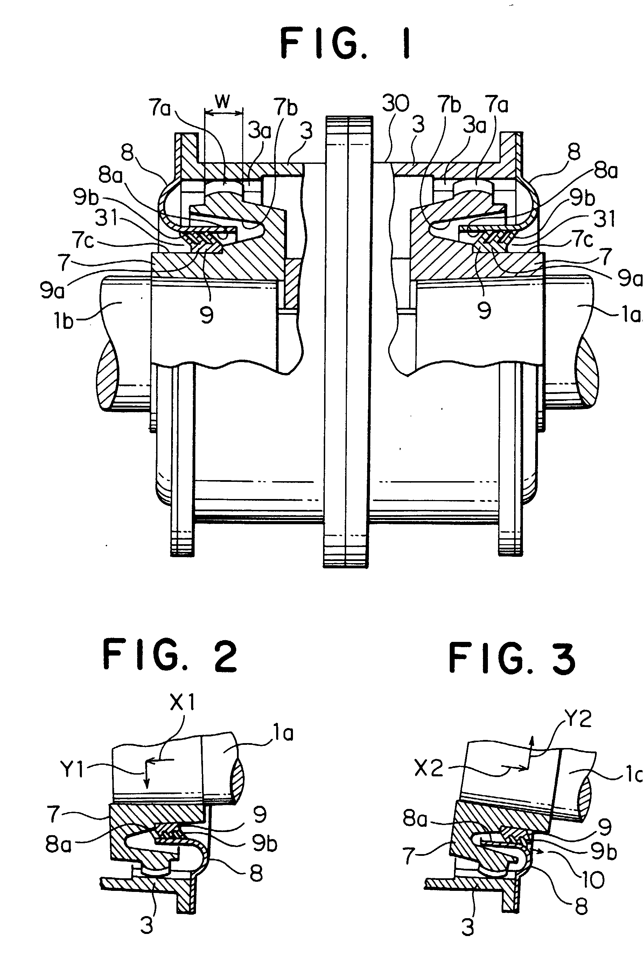

Figs. 1-3 show the type of geared joint of the invention, however the sealing member does not fall under the scope of the appended claims.

The designations 1a, 1b in Fig. 1 represent rotating shafts having the same structure as those denoted at 1a, 1b in Fig. 12. In Fig. 1, onto both the rotating shafts 1a, 1b there are, respectively, attached pinions 7 equipped with curved-face external gears 7a on their peripheries. Further, each of the pinions 7 has a ring-like cavity 7b open axially and outwardly, and has a holding section 7c for holding a ring-like elastic sealing member 9 which will be described later. A portion of the cavity 7b of each of the pinions 7 is positioned within a space defined between planes including both the end surfaces of the external gear 7a of the pinion 7, and at least a portion of the holding section 7c of each of the pinions 7 is also positioned within the space defined between the planes including both the end surfaces of the external gear 7a of the pinion 7.

To an end portion of each of sleeve components 3 there is fixedly attached the outer edge portion of a cylindrical end cover 8. At least a portion of a contacted portion 8a, being formed at the inner edge portion of the end cover 8, is present within the space defined between the planes including both the end surfaces of the external gear 7a of the pinion 7, and positioned to be separated by a predetermined distance from the pinion 7 so as to define a ring-like gap 31. A fixture portion 9a of the sealing member 9 is fixedly secured to the holding section 7c of the pinion 7 within the defined gap 31. The ring-like elastic sealing member 9, made of nitrile rubber having a hardness of 60 degrees, is provided with a contacting portion 9b comprising plural flange-like contact pieces extending obliquely to spread outwardly about the axis of the pinion 7. Moreover, each of the sealing members 9 is fixed to the holding section 7c such that at least a portion of the contact portion 9 elastically contacts with the entire circumference of the contacted portion 8a under a given pressure within the space defined between the planes including both the end surfaces of the external gear 7a.

Secondly, a description will be made with reference to Figs. 2 and 3 in terms of an operation of the foregoing arrangement. Let it be assumed that the first rotating shaft 1a is displaced a distance X1 inwardly of the sleeve component 3 in the X-axis direction in Fig. 2 and further displaced and inclined by a distance Y1 with respect to its own original axis in the Y-axis direction. Since a portion of the contacted portion 8a which comes into contact with the contacting portion 9b of the sealing member 9 is positioned within the space between the planes including both the end surfaces of the external gear 7a, the distance moved by the contacting portion 9b is reduced compared with the inclination angle relative to the sleeve component 3 of the pinion 7, and hence the displacement becomes small so as to keep an excellent contact state of the contacting portion 9b with the contacted portion 8a.

Furthermore, let it be assumed that the first rotating shaft 1a is displaced by a distance X2 outward from the sleeve component 3 in the X-axis direction, and is displaced and inclined by a distance Y2 in the Y-axis direction with respect to its own original axis. Since a portion of the contacted portion 8a which comes into contact with the contacting portion 9b of the sealing member 9 is positioned within the space between the planes including both the end surfaces of the external gear 7a, the moving distance of the contacting portion 9b similarly becomes small as compared with the inclination angle relative to the sleeve component 3 of the pinion 7, and hence the displacement becomes small so as to keep an excellent contact state of the contacting portion 9b with the contacted portion 8a.

In addition, even if as illustrated in Fig. 3 the first rotating shaft 1a is displaced by the distance X2 outwardly of the sleeve component 3, all of the contacting portion 9b of the sealing member 9 is not allowed to separate from the contacted portion 8a of the end cover 8. Dust, moisture and others coming in between the contact pieces of the contacting portion 9b separating from the contacted portion 8a of the end cover 8 can be discharged along the contact pieces by the centrifugal force produced due to the rotation of the pinion 7,as indicated by the arrow 10 in Fig.

Returning back to Fig. 1, if the sealing member 9 is located so that the center line of the contacting portion 9b is coincident with the center line of the gear width W of the pinion 7, when the disalignment occurs between both the rotating shafts la, 1b, the displacement of the contacting portion 9b of the sealing member 9 is minimized, thus maintaining a more excellent contact condition of the contacting portion 9b with the contacted portion 8a.

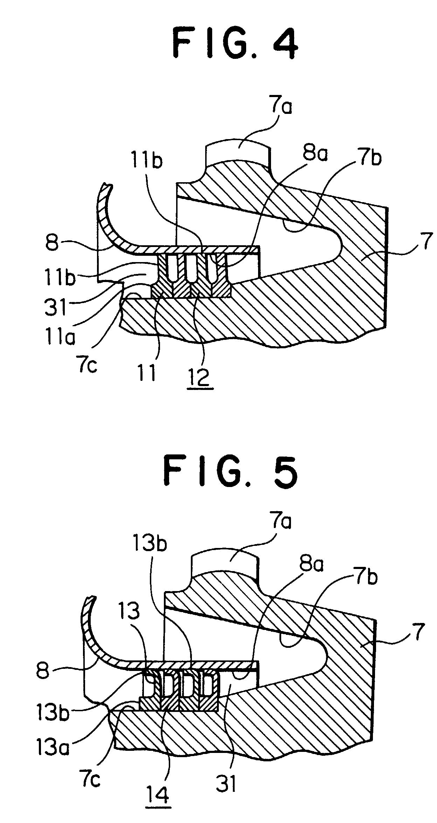

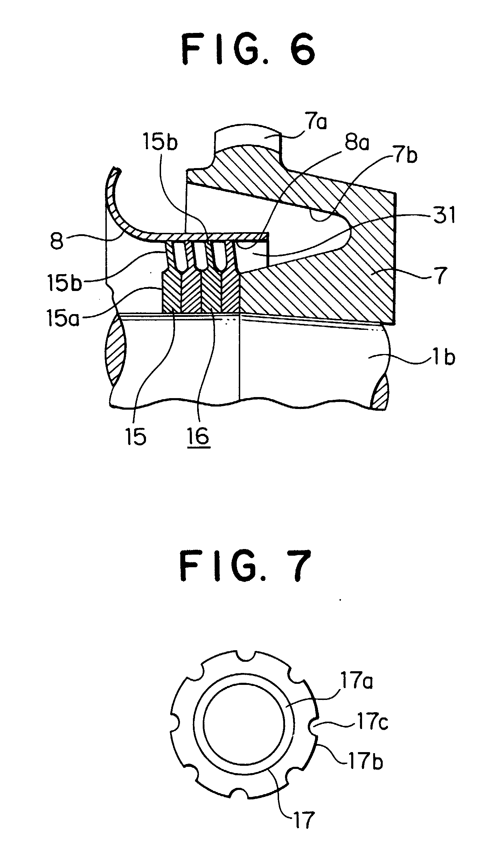

A first embodiment will be described hereinbelow with reference to Fig. 4 which is a cross-sectional view of its main part. This embodiment differs from the Fig. 1 in that plural seal rings 11 of the type shown in Fig. 7 are arranged side by side to make up a sealing member 12. In this embodiment fixture portions 11a of the seal rings 11 are fixedly secured to a holding section 7c to permit contacting portions 11b of the seal rings 11 to excellently come into contact with a contacted portion 8a. In addition, since the seal rings 11 are arranged side by side, it is possible to easily manufacture the sealing member 12 and readily adjust the number of the contacting portions 11b.

Fig. 5 shows another arrangement but having sealing rings which do not fall under the claims, fixture portions 13a of the seal rings 13 are fixed to a holding section 7c of a pinion 7, and the contacting portions 13b which are brought into elastic contact with a contacted portion 8a of an end cover 8 under a given pressure are curved towards the outside of the end cover 8 .

With the contacting portions 13b having a curved configuration to enlarge the contacting area of the contacting portion 13b, this arrangement can also improve the sealing function.

Fig. 6 is a cross-sectional view of a main part of a second embodiment according to this invention when using the seal rings of Fig. 7. In Fig. 6, on a second rotating shaft 1b there are mounted fixture portions 15a of seal rings 15. The seal rings 15 are made of nitrile rubber and have a flange-like contacting portion 15b which is bent outwardly and comes into elastic contact with a contacted portion 8a of an end cover 8 under a given pressure. The seal rings 15 are arranged side by side to make up a sealing member 16. The sealing member 16 is set in a gap 31 such that at least one of the contacting portions 15b is brought into contact with the entire circumference of the contacted portion 8a under the given pressure within a space defined between planes including both the end surface of an external gear 7a. Not to mention, like the second rotating shaft 1b a similar sealing member 16 is fixedly attached onto a first rotating shaft 1a.

In the Fig. 4 embodiment the sealing member 12 is fixedly secured to the pinion 7, while in the Fig. 6 embodiment the sealing members 16 are fixedly secured to the first and second rotating shafts 1a, 1b. As with the Fig. 4 embodiment, this embodiment can ensure an excellent contact of the contacting portions 15b of the seal rings 15 with the contacted portion 8a, concurrently with making it possible to readily manufacture the sealing members 16 by successively arranging the seal rings 15 and to adjust the number of the contacting portions 15b with ease.

Further, the Fig. 4 embodiment has been described as having the sealing member 11 formed with the successively arranged ring-like contacting portions 11b brought into contact with the contacted portion 8a of the end cover 8, while using a seal ring 17 as shown in Fig. 7. That is, in the flexible geared joint, the seal ring 17 is composed of a ring-like fixture portion 17a and a flange-like contacting portion 17b extending radially from the fixture portion 17a, the contacting portion 17b having, on its circumference, plural notched portions 17c formed at a given interval. Here, the notched portions 17c can be made just by linearly cutting into the contacting portion 17b.

With this arrangement, in response to occurrence of a disalignment between both the rotating shafts 1a, 1b, the contacting portion 17b can easily deform in accordance with the disalignment, thereby making a closer contact of the contacting portion 17b with the contacted portion 8a to improve the hermetic seal function of the flexible geared joint.

In addition, to construct the sealing member, plural seal rings 17 are arranged side by side with the respective notches being shifted from each other in the circumferential directions, it is possible to prevent dust from coming in from the external so as to improve the hermetic seal function.

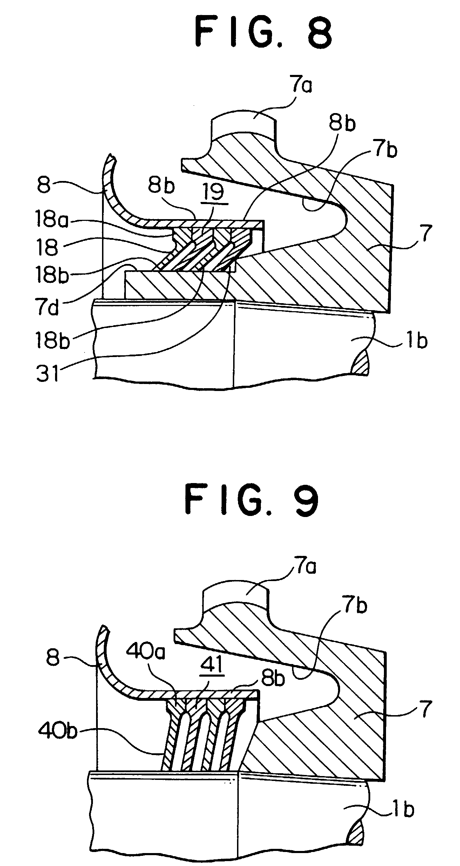

Another arrangement, not part of the invention, is shown in Fig. 8, which is a cross-sectional view of a main part of a flexible geared joint. Although in the Fig. 4 embodiment the sealing member 12 is fixed to the pinion 7, in this arrangement fixture portions 18a of a sealing member 19 are fixed to a holding section 8b of an end cover 8 and contacting portions 18b of seal rings 18 are brought into contact with a contacted portion 7d of a pinion 7.

The sealing member 19 is placed in a gap 31 such that at least one of the contacting portions 18b is brought into elastic contact with the contacted portion 7d of the pinion 7 over its entire circumference under a given pressure within a space defined between planes including both the end surfaces of an external gear 7a.

Fig. 9 is a cross-sectional view showing another arrangement, also not part of this invention.

Plural seal rings are arranged side by side to make up a sealing member 41. Fixture portions 40a of the seal rings are fixed to a holding section 8b of an end cover 8, and contacting portions 40b of the seal rings are brought into contact with a rotating shaft 1b. The difference of this arrangement from Fig. 8 is that the contacting portions 40b contact with the rotating shaft 1b.

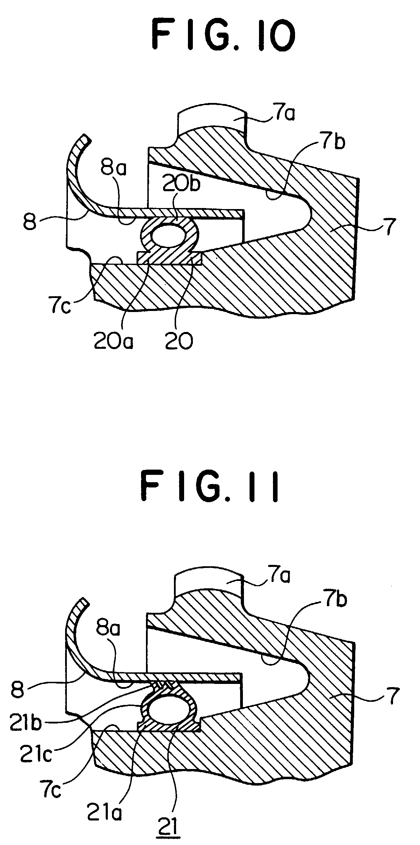

Fig. 10 is a cross-sectional view showing a main part of a flexible geared joint having seals not falling under the claims. In Fig. 10, a fixture portion 20a of a sealing member 20 is fixedly secured to a holding section 7c of a pinion 7. This sealing member 20 has a circular and hollow configuration and is made of an elastic nitrile rubber. A contacting portion 20b which is the top of the sealing member 20 is brought into elastic contact with a contacted portion 8a of an end cover 8 under a given pressure. Further, at least a portion of the contacting portion 20b is positioned within a space made between planes including both the end surfaces of an external gear 7a.

The sealing member 20 has a circular and hollow configuration, whereby it is possible to maintain the seal function with the sealing member 20 being easily deformed according to a disalignment produced between rotating shafts 1a, 1b.

Fig. 11 is a cross-sectional view illustrating a modification of the Fig. 10, also not falling under the appended claims. A seal member 21 comprises plural divided contacting portions 21b which come into contact with a contacted portion 8a of an end cover 8, a fixture portion 21a, and a circular and hollow holding portion 21c interposed between the contacting portions 21b and the fixture portion 21a. It is possible to maintain a superior contact state of the contacting portions 21b with the contacted portion 8a because of using plural divided contacting portions 21b.

As described above, according to this invention, the flexible geared joint is arranged such that at least a portion of the contacting area between a contacting portion of a sealing member and a contacted portion is positioned within a space defined between the planes containing the end surfaces of the external gear. The moving distance of the contacting portion of the seal member becomes small as compared with the inclination angle of the pinion relative to a sleeve and the deformation of the contacting portion becomes small, thus making it possible to maintain a superior seal function between the contacting portion and the contacted portion for an extensive period of time.

The sealing member is made up of plural seal rings arranged side by side. Thus it is possible to easily manufacture the sealing member, and readily adjust the number of the seal rings.

Preferably the sealing member is located such that the center line of the contacting portion of the sealing member is coincident with the center line of the gear width of the pinion. If a disalignment occurs between both the rotating shafts, the deformation of the contacting portion of the sealing member is thereby reduced as much as possible so as to maintain a superior seal function of the contacting portion relative to the contacted portion for an extensive period of time.

The contacting portion of the sealing rings is formed to have a flange-like configuration and notch portions. The contacting portion becomes more deformable to permit the contacting portion to contact with the contacted portion more closely.

Furthermore, when the notch portions are shifted from each other in their circumferential directions, it is possible to prevent dust from invading from the exterior with the more improved seal function.

Preferably, the sealing member is made of a nitrile rubber having a hardness of 60 degrees. Then it has a suitable flexibility to maintain good contact between the contacting portion and the contacted portion, and further has an improved oilproofing function .

Although above-described embodiments employ sealing members made of a nitrile rubber having a hardness of 60 degrees, the sealing members can have a hardness of 40 or 90 degrees. Further, it is also appropriate to use, in place of the nitrile rubber, a silicon rubber, urethane rubber, fluorine-contained rubber, ethylene propylene rubber, oleo-plastic, polyamide synthetic high polymer, polytetrafluoroethylene, or ethylene-butadiene rubber.

## Claims

1. A flexible geared joint for power transmission between first and second rotating shafts comprising:
a sleeve (3) having internal gears (3a) on its inner circumferential surface;
a pinion (7) to be fixedly secured to each of said first and second rotating shafts and having, on its outer circumferential surface, an external gear (7a) engaged with said internal gear (3a) of said sleeve (3), said external gear (7a) being movable by a given distance in the direction of the axis of said internal gear (7a) and having a curved-face configuration to allow inclination by a predetermined angle with respect to the axis of said internal gear;
an end cover (8) fixedly secured to each end of said sleeve (3) and each spaced from its respective pinion (7) to define a ring-like gap (31) therebetween; and
ring-like sealing members (11, 17) placed in said ring-like gap (31) over the entire circumference and having contacting means (11b, 17b) which come into elastic contact with a contacted portion (8a) of said end covers (8) to seal said gap (31),
characterized in that
each of said sealing members is formed by arranging plural seal rings (17) side by side, each of said seal rings having notch portions (17c) at its circumferential section and said notch portions (17c) of said plural seal rings (17) are shifted from each other in their circumferential direction,
wherein at least part of the contacted portion (8a) of each of said end covers (8) is positioned within a space defined between the planes containing the end surfaces of the respective external gear (7a), and at least part of the contacting area between said contacting means (11b, 17b) of said sealing member (11, 17) and the contacted portion (8a) is located within said space.

2. A flexible geared joint as defined in Claim 1, wherein each of said sealing members (11, 17) is fixedly secured to each of said pinions (7) and is brought into contact with its respective end cover (8), said contacting means (11a, 17a) of said sealing member (11, 17) being brought into contact with the entire circumference of said contacted portion (8a) of said end cover (8).

3. A flexible geared joint as defined in Claim 1, wherein each of said sealing members (11, 17) is fixedly secured to each of said first and second rotating shafts (1a, 1b) and brought into contact its respective end cover (8), said contacting means (11a, 17a) of said sealing member (11, 17) being brought into contact with the entire circumference of said contacted portion (8a) of said end cover (8).

4. A flexible geared joint as defined in any of the Claims 1 to 3, wherein each of said sealing members (11, 17, 18) is located such that the center line of said contacting means (11b, 17b, 18b) of said sealing member is coincident with the center line of the width of said external gear (7a) of said pinion (7).

5. A flexible geared joint as defined in any of the Claims 1 to 4, wherein said contacting means (11b, 17b) of each of said sealing members (11, 17) has a flange-like configuration.

6. A flexible geared joint of any one of the Claims 1 to 5, wherein each of said sealing members (11, 17, 18) is made of a nitrile rubber having a hardness of 60 degrees.

## Patentansprüche

1. Flexible gekuppelte Verbindung zur Leistungsübertragung zwischen einer ersten und einer zweiten rotierenden Welle, die folgendes aufweist:
ein Gehäuse (3), das innere Eingriffselemente (3a) an seiner inneren Umfangsfläche hat,
ein Ritzel (7), um sicher an jeweils der ersten und zweiten rotierenden Welle befestigt zu werden, das an seiner äußeren Umfangsfläche ein äußeres Eingriffselement (7a) aufweist, das mit dem inneren Eingriffselement (3a) des Gehäuses (3) in Eingriff ist, wobei das äußere Eingrifselement (7a) um eine gegebene Entfernung in die Richtung der Achse des inneren Eingriffselements (3a) bewegbar ist und eine Konfiguration mit einer gewölbten Stirnseite hat, um eine Neigung um einen vorgegebenen Winkel bezüglich der Achse des inneren Eingriffselements zu erlauben,
eine Endabdeckung (8), die sicher an jedem Ende des Gehäuses (3) befestigt ist und jeweils von seinem jeweiligen Ritzel (7) beabstandet ist, um einen ringartigen Zwischenraum dazwischen zu definieren, und
ringartige Dichtungselemente (11, 17), die in dem ringartigen Zwischenraum (31) über den gesamten Umfang angeordnet sind und eine Kontakteinrichtung (11b, 17b) haben, welche in elastischem Kontakt mit einem kontaktierten Abschnitt (8a) der Endabdeckungen kommt (8) um den Zwischenraum (31) abzudichten,
dadurch gekennzeichnet,
daß jedes der Dichtungselemente dadurch gebildet ist, daß eine Mehrzahl von Dichtungsringen (17) Seite an Seite angeordnet sind, wobei jeder der Dichtungsringe gekerbte Abschnitte (17c) an seinem Umfangsbereich hat und die gekerbten Abschnitte (17c) der Mehrzahl von Dichtungsringen (17) gegeneinander in ihrer Umfangsrichtung versetzt sind,
wobei jeweils mindestens ein Teil des kontaktierten Abschnitts (8a) der Endabdeckungen (8) innerhalb eines Raumes positioniert ist, der zwischen den Ebenen definiert ist, die die Endflächen des jeweiligen äußeren Eingriffselements (7a) beinhalten, und wobei mindestens ein Teil des Kontaktbereichs zwischen der Kontakteinrichtung (11b, 17b) des Dichtungselements (11, 17) und dem kontaktierten Abschnitt (8a) innerhalb dieses Raumes liegt.

2. Flexible gekuppelte Verbindung nach Anspruch 1, wobei jedes der Dichtungselemente (11, 17) sicher an dem jeweiligen Ritzel (7) befestigt ist und mit der jeweiligen Endabdeckung (8) in Kontakt gebracht ist, wobei die Kontakteinrichtung (11a, 17a) des Dichtungselements (11, 17) mit dem gesamten Umfang des kontaktierten Abschnitts (8a) der Endabdeckung (8) in Kontakt gebracht ist.

3. Flexible gekuppelte Verbindung nach Anspruch 1, wobei jedes der Dichtungselemente (11, 17) sicher jeweils an der ersten (1a) und an der zweiten (1b) rotierenden Welle befestigt ist und mit der jeweiligen Endabdeckung (8) in Kontakt gebracht ist, wobei die Kontakteinrichtung (11a, 17a) des Dichtungselements (11, 17) mit dem gesamten Umfang des kontaktierten Abschitts (8a) der Endabdeckung (8) in Kontakt gebracht ist.

4. Flexible gekuppelte Verbindung nach einem der Ansprüche 1 bis 3, wobei jedes der Dichtungselemente (11, 17, 18) so angeordnet ist, daß die Mittellinie der Kontakteinrichtung (11b, 17b, 18b), des Dichtungselements mit der Mittellinie der Breite des äußeren Eingriffselements (7a) des Ritzels (7) übereinstimmt .

5. Flexible gekuppelte Verbindung nach einem der Ansprüche 1 bis 4, wobei die Kontakteinrichtung (11b, 17b) von jedem der Dichtungselemente (11, 17) eine flanschartige Konfiguration aufweist.

6. Flexible gekuppelte Verbindung nach einem der Ansprüche 1 bis 5, wobei jedes der Dichtungselemente (11, 17, 18) aus einem Nitrilkautschuk gefertigt ist und eine Härte von 60 Grad aufweist.

## Revendications

1. Joint flexible à engrenage pour une transmission de puissance entre des premier et second arbres de rotation comprenant :
un manchon (3) ayant des engrenages internes (3a) sur sa surface circonférentielle intérieure;
un pignon (7) à fixer solidement sur chacun desdits premier et second arbres de rotation et ayant, sur sa surface circonférentielle extérieure, un engrenage externe (7a) en prise avec ledit engrenage interne (3a) dudit manchon (3), ledit engrenage externe (7a) étant déplaçable sur une distance donnée dans la direction de l'axe dudit engrenage interne (7a) et ayant une configuration de face courbée pour permettre l'inclinaison suivant un angle prédéterminé relativement à l'axe dudit engrenage interne;
un capot d'extrémité (8) fixé solidement à chaque extrémité dudit manchon (3) et chacun espacé de son pignon respectif (7) pour définir un espace annulaire (31) entre ceux-ci; et
des éléments d'étanchéité annulaires (11, 17) placés dans ledit espace annulaire (31) sur toute la circonférence et ayant des moyens de contact (11b, 17b) qui viennent en contact élastique avec une portion à contacter (8a) desdits capots d'extrémité (8) pour rendre étanche ladite fente (31),
caractérisé en ce que
chacun desdits éléments d'étanchéité est formé en agençant plusieurs anneaux d'étanchéité (17) côte à côte, chacun desdits anneaux d'étanchéité ayant des portions à encoche (17c) à leur section circonférentielle, et lesdites portions à encoche (17c) de ladite pluralité d'anneaux d'étanchéité (17) sont décalées les unes des autres dans leur direction circonférentielle,
où au moins une partie de la portion à contacter (8a) de chacun desdits capots d'extrémité (8) est positionnée dans un espace défini entre les plans contenant les surfaces d'extrémité de l'engrenage externe respectif (7a), et au moins une partie de la zone de contact entre lesdits moyens de contact (11b, 17b) dudit élément d'étanchéité (11, 17) et la portion contactée (8a) se situe dans ledit espace.

2. Joint flexible à engrenage selon la revendication 1, où chacun desdits éléments d'étanchéité (11, 17) est fixé solidement à chacun desdits pignons (7) et est amené en contact avec son capot d'extrémité respectif (8), lesdits moyens de contact (11a, 17a) dudit élément d'étanchéité (11, 17) étant amenés en contact avec toute la circonférence de ladite portion contactée (8a) dudit capot d'extrémité (8).

3. Joint flexible à engrenage selon la revendication 1, où chacun desdits éléments d'étanchéité (11, 17) est fixé solidement à chacun desdits premier et second arbres de rotation (1a, 1b) et est amené en contact avec son capot d'extrémité respectif (8), ledit moyen de contact (11a, 17a) dudit élément d'étanchéité (11, 17) étant amené en contact avec toute la circonférence de ladite portion contactée (8a) dudit capot d'extrémité (8).

4. Joint flexible à engrenage selon l'une des revendications 1 à 3, où chacun desdits éléments d'étanchéité (11, 17, 18) est situé de façon que la ligne centrale dudit moyen de contact (11b, 17b, 18b) dudit élément d'étanchéité coïncide avec la ligne centrale de la largeur dudit engrenage externe (7a) dudit pignon (7).

5. Joint flexible à engrenage selon l'une des revendications 1 à 4, où ledit moyen de contact (11b, 17b) de chacun desdits éléments d'étanchéité (11, 17) a une configuration en forme de rebord.

6. Joint flexible à engrenage selon l'une des revendications 1 à 5, où chacun desdits éléments d'étanchéité (11, 17, 18) est réalisé en caoutchouc nitrile d'une dureté de 60 degrés.
